# EUROPEAN PATENT APPLICATION

(11) **EP 2 966 842 A1**
(43) Date of publication of application: **13.01.2016**
(21) Application number: 13876993.0
(22) Date of filing: 12.08.2013
(51) Int. Cl.: H04M 1/725

(54) **METHOD AND SYSTEM FOR TURNING OFF ALARM OF MOBILE TERMINAL**

(30) Priority: 06.03.2013 CN 201310070954
(71) Applicant: Huizhou TCL Mobile Communication Co., Ltd., Hui Zhou Guangdong 516006 (CN)
(72) Inventor: CHEN, Jianqiang, Ningbo Zhejiang 315040 (CN); CHAI, Feifei, Ningbo Zhejiang 315040 (CN)
(74) Representative: Brachmann, Roland W.
(86) International application number: PCT/CN2013/081265
(87) International publication number: WO 2014/134901

(57) **Abstract**

Disclosed are a method and a system for turning off an alarm of a mobile terminal. The method comprises: presetting an area threshold; when an alarm of a mobile terminal sounds, automatically lighting a display screen of the mobile terminal; detecting whether a touch signal is input, and when the touch signal is input, calculating the area of an effective touch region of a touchscreen touched by a user; comparing the calculated area of the effective touch region with the area threshold, and if the area of the effective touch region is greater than or equal to the area threshold, controlling to turn off the alarm; and if the area of the effective touch region is smaller than the area threshold, making the alarm of the mobile terminal continue sounding. In this manner, the problem is solved that a turning-off operation of the existing mobile terminal is troublesome when the alarm sounds, the operation accuracy requirements are low, the method and the system are implemented by using software, the implementation method is simple, and the cost is lower.

## Description

### Field of the Invention

The present invention relates to the field of intelligent terminals and in particular to a method and apparatus for high current charging of an intelligent terminal.

### Description of the Related Art

Alarm reminder is a basic function of mobile phones. When an alarm sets off on weekends or days off due to failure to cancel the setting, or when you still have time to sleep for a little bit longer and yet the alarm still keeps on ringing on time, however, it is obviously painful. According to the conventional way to turn off an alarm, you usually have to open your tired eyes, turn on the mobile phone, and then turn off the alarm only by performing specific operations in a designated region, such as sliding horizontally, sliding in a curve, etc. In a sleepy state, however, it usually takes a lot of time and effort to complete such operations. The alarm is usually turned off after many times of sliding, which disrupts your good sleep. When you are awakened by the alarm in the morning but want to go back to sleep, it is very likely that the alarm could not be successfully turned off after many times of trying as the sliding is not fully completed as usual operations do.

Therefore, the prior art is in need of improvement and development.

### Summary of the Invention

The technical problem that the present invention intends to solve is, in light of the above drawbacks of the prior art, to provide a method and system for turning off the alarm of a mobile terminal, thereby solving the problem of inconvenient operation to turn off a ringing alarm of a mobile terminal according to the prior art.

To solve the technical problem, the present invention employs the following technical solution:

A method for turning off the alarm of a mobile terminal, wherein it comprises the following steps:
A. Presetting an area threshold value;
B. Automatically turning on a mobile terminal's screen when the alarm of the mobile terminal sets off;
C. Detecting if a touch signal is inputted, when a touch signal is inputted, calculating the area of the valid touch region in which a user touches the touchscreen;
D. Comparing the calculated area of the valid touch region with the area threshold value, if the area of the valid touch region is greater than or equal to the area threshold value, controlling to turn off the alarm; if the area of the valid touch region is smaller than the area threshold value, the alarm of the mobile terminal keeps ringing.

The method for turning off the alarm of a mobile terminal, wherein the Step C further comprises:
C0. When the screen of the mobile terminal is turned on, detecting if a touch signal is inputted at a preset time interval.

The method for turning off the alarm of a mobile terminal, wherein the Step A further comprises:
A1. Pre-storing a plurality of graphics.

The method for turning off the alarm of a mobile terminal as set forth in Claim 3, characterized in that the Step C specifically comprises:
C 1. Dividing the valid touch region in which the user touches the touchscreen into a plurality of graphics according to the pre-stored graphics, calculating the area of each graphic, respectively, then adding them up for the sum, and obtaining the area of the valid touch region.

The method for turning off the alarm of a mobile terminal, wherein the graphics comprise: rectangle, circle and triangle.

A system for turning off the alarm of a mobile terminal, wherein it comprises:
- A storage module for storing the preset area threshold value;
- A detection module for detecting if a touch signal is inputted;
- A calculation module for calculating the area of the valid touch region in which a user touches the touchscreen;
- A comparison module for comparing the area of the valid touch region in which a user touches the touchscreen calculated by the calculation module with the area threshold value;
- An alarm control module for controlling the alarm according to the comparison result of the comparison module, when the area of the valid touch region is greater than or equal to the area threshold value, controlling to turn off the alarm; when the area of the valid touch region is smaller than the area threshold value, the alarm of the mobile terminal keeps ringing.

The system for turning off the alarm of a mobile terminal, wherein it further comprises:
- An interrupt module for sending an interrupt signal to the detection module at a preset time interval so that it detects if a touch signal is inputted.

The system for turning off the alarm of a mobile terminal, wherein the storage module is further for storing a plurality of graphics.

The system for turning off the alarm of a mobile terminal, wherein the mobile terminal is a mobile phone or tablet computer having a touchscreen.

The present invention provides a method and system for turning off the alarm of a mobile terminal, which effectively solves the problem of inconvenient operation to turn off a ringing alarm of a mobile terminal. It automatically turns on a mobile terminal's screen when the alarm of the mobile terminal sets off; detects if a touch signal is inputted, when a touch signal is inputted, calculates the area of the valid touch region in which a user touches the touchscreen, when the area of the valid touch region is greater than or equal to the area threshold value, controls to turn off the alarm; the operation method is simple, which enables a user to turn off an alarm without accurate operations and without opening eyes. The operations do not have to be very accurate. A user just needs to use a palm to pat or touch a large area of the mobile phone surface, and the alarm stops right away. It is rapid and effective. The implementation method is simple, which can be implemented via software, and the cost is relatively low.

### Brief Description of the Accompanying Drawings

- Fig.1: is a flow chart of a preferred embodiment of the method for turning off the alarm of a mobile terminal according to the present invention.
- Fig.2: is a block diagram of the structure of a preferred embodiment of the system for turning off the alarm of a mobile terminal according to the present invention.

### Detailed Description of the Preferred Embodiment

The present invention provides a method and apparatus for high current charging of an intelligent terminal. To make the object, technical solution and advantages of the present invention clearer and more specific, the present invention will be further described in detail below with reference to the accompanying drawings and embodiments. It should be understood that the specific embodiments herein are only used to explain the present invention and are not used to limit the present invention.

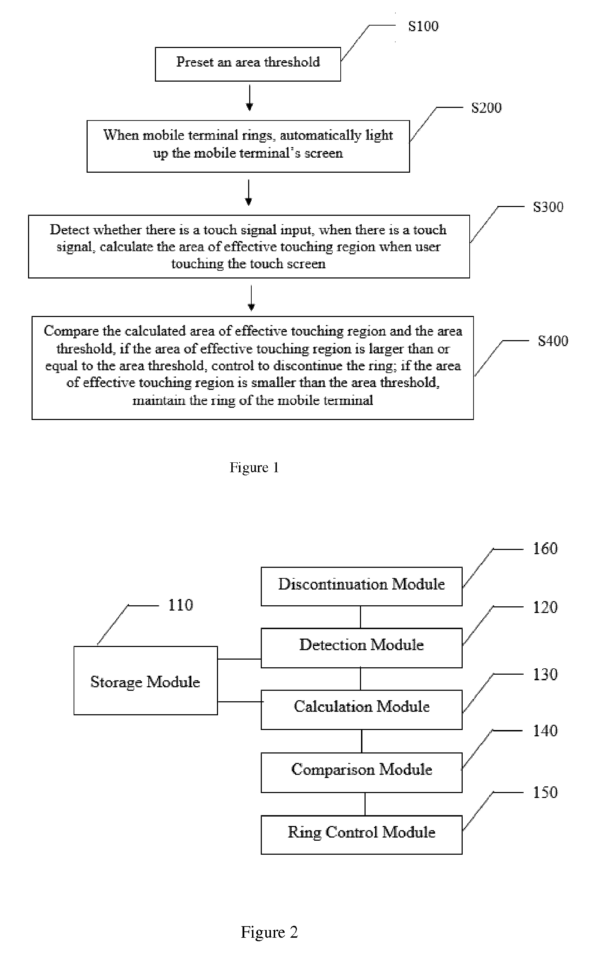

Referring to Fig.1, Fig.1 is a flow chart of a preferred embodiment of the method for turning off the alarm of a mobile terminal according to the present invention, which comprises the following steps:
Step S100. Presetting an area threshold value;
Step S200. Automatically turning on a mobile terminal's screen when the alarm of the mobile terminal sets off;
Step S300. Detecting if a touch signal is inputted, when a touch signal is inputted, calculating the area of the valid touch region in which a user touches the touchscreen;
Step S400. Comparing the calculated area of the valid touch region with the area threshold value, if the area of the valid touch region is greater than or equal to the area threshold value, controlling to turn off the alarm; if the area of the valid touch region is smaller than the area threshold value, the alarm of the mobile terminal keeps ringing.

The above steps will be described in detail below with reference to specific embodiments.

In Step S100, first preset an area threshold value S'. The value of the preset area threshold value S' by performing an estimated setting according to the palm size and touchscreen size, for example, it may be estimated based on the round region with the diameter of 4 cm in the palm center, the area of the valid touch region is about 12.56 cm², and the area threshold value S' herein may be set to 10 ∼ 12 cm².

In Step S200, when the software detects that the alarm of the mobile terminal sets off, the CPU of the mobile terminal automatically controls to turn on the mobile terminal's screen, then the mobile terminal's screen is turned on, and enter Step S300.

In Step S300, detect if a touch signal is inputted, when a touch signal is inputted, calculate the area S of the valid touch region in which a user touches the touchscreen; when no touch signal is inputted, the alarm of the mobile terminal keeps ringing. Specifically, the touchscreen of the mobile terminal possesses the function of identifying large area contact, such as multi-touch. When the touchscreen is automatically turned on, a touch signal can be detected as the user touches the touchscreen in a large area with a palm, output the valid touch region information, and then calculate. The valid touch region is the valid touch signal that the user touches the touchscreen, i.e. the touch signal that can be detected. Generally speaking, as touchscreens are divided into capacitor panels and resistor panels and due to inconsistent pressure under which the user's palm touches the touchscreen and other factors, locations that are touched do not necessarily have touch signals.

In Step S400, after the area S of the valid touch region in which a user touches the touchscreen is obtained through calculation, compare the calculated area S of the valid touch region with the area threshold value S', if the area S of the valid touch region is greater than or equal to the area threshold value S', control to turn off the alarm; if the area S of the valid touch region is smaller than the area threshold value S', the alarm of the mobile terminal keeps ringing.

The valid touch region in which a user touches the touchscreen is usually of an irregular graphic, and the irregular graphic is a graphic with an area that usually cannot be reached using an area equation. Furthermore, to more accurately calculate the area S of the valid touch region, said Step S100 further comprises: pre-store a plurality of graphics. Specifically, the graphic is usually a common graphic, i.e. a regular graphic, namely a graphic with an area that can be directly reached using an area equation, including rectangle, circle and triangle. Then, the valid touch region information regarding the user touching the touchscreen may be divided into a plurality of graphics according to the pre-stored graphics, the area of each graphic is calculated, respectively, then they are added up for the sum to obtain the area S of the valid touch region. In such a way, the obtained calculation result is more accurate and closer to the actual contact area. For example, a rough graphic of the valid touch region in which the user touches the touchscreen can be determined first. The rough graphic is a fuzzy graphic, which does not have to be accurate and can be rectangle, circle and triangle. With the rough graphic of the valid touch region as an example, the pre-stored rectangle is used to approach the valid touch region in which the user touches the touchscreen. When the rectangle approaching the valid touch region is the biggest, i.e. when the rectangle will exceed the valid touch region if further increasing, a pre-stored graphic is further used to approach other regions of the valid touch region than the rectangle. As a result, it realizes that the valid touch region in which the user touches the touchscreen is divided into a plurality of graphics, the area of each graphic is calculated, respectively, and lastly they are added up for the sum to obtain the area of the valid touch region. In such a way, the calculation is simpler.

Furthermore, Step S100 further comprises: set a preset time Δt in advance. Then, Step S300 further comprises: when the screen of the mobile terminal is turned on, detecting if a touch signal is inputted at a preset time interval Δt. Specifically, to detect if a touch signal is inputted, perform detection at a preset time interval Δt, which consequently improves the sensitivity in terms of touch response time.

Furthermore, to improve the effective determination of touch signals, preset a threshold time, when the user touches the touchscreen, detect if the time of the user touch exceeds the threshold time, a touch longer than the threshold time is a valid touch, then proceed to the next step of area calculation, while a touch not longer than the threshold time is not counted as a valid touch signal. In such a way, user experience is greatly improved, which also indicates a user's willingness to turn off the alarm. If a user does not want to turn it off, then the user does not touch the touchscreen within the threshold time.

Based on the above method for turning off the alarm of a mobile terminal, the present invention further provides a system for turning off the alarm of a mobile terminal, as shown in Fig.2, comprising:
A storage module 110 for storing the preset area threshold value;
A detection module 120 for detecting if a touch signal is inputted;
A calculation module 130 for calculating the area of the valid touch region in which a user touches the touchscreen;
A comparison module 140 for comparing the area of the valid touch region in which a user touches the touchscreen calculated by the calculation module 130 with the area threshold value;
An alarm control module 150 for controlling the alarm according to the comparison result of the comparison module 140, when the area of the valid touch region is greater than or equal to the area threshold value, controlling to turn off the alarm; when the area of the valid touch region is smaller than the area threshold value, the alarm of the mobile terminal keeps ringing.

The storage module 110, the detection module 120, the calculation module 130, the comparison module 140 and the alarm control module 150 are connected sequentially. Furthermore, please refer to Fig.2, and the system for turning off the alarm of a mobile terminal further comprises: an interrupt module 160, the interrupt module 160 is connected to the detection module 120 and used for sending an interrupt signal to the detection module 120 at a preset time interval so that it checks if a touch signal is inputted.

Furthermore, the storage module 110 is further connected to the calculation module 130 and used for storing a plurality of graphics.

Specifically, the interrupt module 160 sends an interrupt signal to the detection module 120 at a preset time interval Δt so that it checks if a touch signal is inputted; upon receiving the interrupt signal, the detection module 120 checks if a touch signal is inputted, if yes, then transmits the valid touch region information to the calculation module 130. The storage module 110 further pre-stores a plurality of graphics, upon receiving the valid touch region information, the calculation module 130 calls graphics stored by the storage module 110 to divide the valid touch region into a number of graphics, i.e. uses a plurality of graphics to approach the valid touch region, then calculates the area of each graphic, respectively, and then outputs the total area value S after the addition of all graphics to the comparison module 140. Upon receiving the total area S transmitted from the calculation module 130, the comparison module 140 compares it with the area threshold value S' stored in the storage module 110, if S ≧ S' is satisfied, then outputs a trigger signal to the alarm turning-off module 150; if S ≧ S' is not satisfied, then does not output signal. Upon receiving the trigger signal transmitted from the comparison module 140, the alarm turning-off module 150 controls to turn off the alarm; otherwise, it does not perform the operation.

Furthermore, the system for turning off the alarm of a mobile terminal further comprises a time determination module (not shown in Fig.2), the storage module 110 further stores a threshold time. The time determination module is for detecting if the time of the user touch exceeds the threshold time, a touch longer than the threshold time is a valid touch, then it proceeds to the next step of area calculation, while a touch not longer than the threshold time is not counted as a valid touch signal. In such a way, user experience is greatly improved, which also indicates a user's willingness to turn off the alarm. If a user does not want to turn it off, then the user does not touch the touchscreen within the threshold time

Based on the above system for turning off the alarm of a mobile terminal, the mobile terminal provided by the present invention is not limited to a mobile phone or tablet computer having a touchscreen, and it may also be used on other mobile terminals.

In summary, the present invention provides a method and system for turning off the alarm of a mobile terminal by presetting an area threshold value; automatically turning on a mobile terminal's screen when the alarm of the mobile terminal sets off; detecting if a touch signal is inputted, when a touch signal is inputted, calculating the area of the valid touch region in which a user touches the touchscreen; when no touch signal is inputted, the alarm of the mobile terminal keeps ringing; comparing the calculated area of the valid touch region with the area threshold value, if the area of the valid touch region is greater than or equal to the area threshold value, controlling to turn off the alarm; if the area of the valid touch region is smaller than the area threshold value, the alarm of the mobile terminal keeps ringing. The operation method is simple, which enables a user to turn off an alarm without accurate operations and without opening eyes. The operations do not have to be very accurate. A user just needs to use a palm to pat or touch a large area of the mobile phone surface, and the alarm stops right away. It is rapid and effective. The implementation method is simple, which can be implemented via software, and the cost is relatively low.

It should be understood that applications of the present invention are not limited by the examples described above. To those skilled in the art, improvements or variations may be made according to the above description, and all of these improvements or variations shall be encompassed by the scope defined by the appended claims of the present invention.

## Claims

1. A method for turning off the alarm of a mobile terminal, **characterized in that** it comprises the following steps:
A. Presetting an area threshold value;
B. Automatically turning on a mobile terminal's screen when the alarm of the mobile terminal sets off;
C. Detecting if a touch signal is inputted, when a touch signal is inputted, calculating the area of the valid touch region in which a user touches the touchscreen;
D. Comparing the calculated area of the valid touch region with the area threshold value, if the area of the valid touch region is greater than or equal to the area threshold value, controlling to turn off the alarm; if the area of the valid touch region is smaller than the area threshold value, the alarm of the mobile terminal keeps ringing.

2. The method for turning off the alarm of a mobile terminal as set forth in Claim 1, **characterized in that** the Step C further comprises:
C0. When the screen of the mobile terminal is turned on, detecting if a touch signal is inputted at a preset time interval.

3. The method for turning off the alarm of a mobile terminal as set forth in Claim 1, **characterized in that** the Step A further comprises:
A1. Pre-storing a plurality of graphics.

4. The method for turning off the alarm of a mobile terminal as set forth in Claim 3, **characterized in that** the Step C specifically comprises:
C 1. Dividing the valid touch region in which the user touches the touchscreen into a plurality of graphics according to the pre-stored graphics, calculating the area of each graphic, respectively, then adding them up for the sum, and obtaining the area of the valid touch region.

5. The method for turning off the alarm of a mobile terminal as set forth in Claim 3, **characterized in that** the graphics comprise: rectangle, circle and triangle.

6. A method for turning off the alarm of a mobile terminal, **characterized in that** it comprises the following steps:
B. Automatically turning on a mobile terminal's screen when the alarm of the mobile terminal sets off;
C. Detecting if a touch signal is inputted, when a touch signal is inputted, calculating the area of the valid touch region in which a user touches the touchscreen;
D. Comparing the calculated area of the valid touch region with the preset area threshold value, if the area of the valid touch region is greater than or equal to the area threshold value, controlling to turn off the alarm;
The Step C further comprises:
- presetting a threshold time, when the user touches the touchscreen, detecting if the time of the user touch exceeds the threshold time, a touch longer than the threshold time is a valid touch, then calculating the area of the valid touch region in which the user touches the touchscreen, while a touch not longer than the threshold time is not counted as a valid touch signal.

7. The method for turning off the alarm of a mobile terminal as set forth in Claim 6, **characterized in that** it further comprise before the Step B:
A. Performing an estimated setting according to the palm size and touchscreen size, determining a value for presetting the area threshold value so as to presetting an area threshold value.

8. The method for turning off the alarm of a mobile terminal as set forth in Claim 6, **characterized in that** the Step C further comprises:
C0. When the screen of the mobile terminal is turned on, detecting if a touch signal is inputted at a preset time interval.

9. The method for turning off the alarm of a mobile terminal as set forth in Claim 7, **characterized in that** the Step A further comprises:
A1. Pre-storing a plurality of graphics.

10. The method for turning off the alarm of a mobile terminal as set forth in Claim 9, **characterized in that** the Step C specifically comprises:
C 1. Dividing the valid touch region in which the user touches the touchscreen into a plurality of graphics according to the pre-stored graphics, calculating the area of each graphic, respectively, then adding them up for the sum, and obtaining the area of the valid touch region.

11. The method for turning off the alarm of a mobile terminal as set forth in Claim 9, **characterized in that** the graphics comprise: rectangle, circle and triangle.

12. A method for turning off the alarm of a mobile terminal, **characterized in that** it comprises the following steps:
A. Performing an estimated setting according to the palm size and touchscreen size, determining a value for presetting the area threshold value so as to presetting an area threshold value.
B. Automatically turning on a mobile terminal's screen when the alarm of the mobile terminal sets off;
C. Detecting if a touch signal is inputted, when a touch signal is inputted, calculating the area of the valid touch region in which a user touches the touchscreen; dividing the valid touch region in which the user touches the touchscreen into a plurality of graphics according to the pre-stored graphics, calculating the area of each graphic, respectively, then adding them up for the sum, and obtaining the area of the valid touch region;
D. Comparing the calculated area of the valid touch region with the area threshold value, if the area of the valid touch region is greater than or equal to the area threshold value, controlling to turn off the alarm.

13. A system for turning off the alarm of a mobile terminal, **characterized in that** it comprises:
- A storage module for storing the preset area threshold value;
- A detection module for detecting if a touch signal is inputted;
- A calculation module for calculating the area of the valid touch region in which a user touches the touchscreen;
- A comparison module for comparing the area of the valid touch region in which a user touches the touchscreen calculated by the calculation module with the area threshold value;
- An alarm control module for controlling the alarm according to the comparison result of the comparison module, when the area of the valid touch region is greater than or equal to the area threshold value, controlling to turn off the alarm; when the area of the valid touch region is smaller than the area threshold value, the alarm of the mobile terminal keeps ringing.

14. The system for turning off the alarm of a mobile terminal as set forth in Claim 13, **characterized in that** it further comprises:
- An interrupt module for sending an interrupt signal to the detection module at a preset time interval so that it detects if a touch signal is inputted.

15. The system for turning off the alarm of a mobile terminal as set forth in Claim 13, **characterized in that** the storage module is further for storing a plurality of graphics.

16. The system for turning off the alarm of a mobile terminal as set forth in any one of Claims 13 to 15, **characterized in that** the mobile terminal is a mobile phone or tablet computer having a touchscreen.
